# EUROPEAN PATENT APPLICATION

(11) **EP 4 692 161 A1**
(43) Date of publication of application: **11.02.2026**
(21) Application number: 24779863.0
(22) Date of filing: 21.03.2024
(51) Int. Cl.: C08G 63/18, C08L 67/02

(54) **POLYESTER ELASTOMER RESIN COMPOSITION**

(30) Priority: 31.03.2023 JP 2023057165
(71) Applicant: TOYOBO MC Corporation, Osaka-shi, Osaka 530-0001 (JP)
(72) Inventor: AKAISHI, Takuya, Otsu-shi, Shiga 520-0292 (JP); AYUZAWA, Yoshitaka, Otsu-shi, Shiga 520-0292 (JP)
(74) Representative: Vossius & Partner Patentanwälte Rechtsanwälte mbB
(86) International application number: PCT/JP2024/011085
(87) International publication number: WO 2024/203743

(57) **Abstract**

The present invention addresses the problem of providing a polyester elastomer resin composition capable of forming a tubular molded article that suppresses the permeation of fuel evaporation gas while exhibiting excellent heat aging resistance, oil resistance, and flexibility. The polyester elastomer resin composition comprises a thermoplastic polyester elastomer (A) including a hard segment and a soft segment that are bonded to each other, and has a melt flow rate of 15 g/10 min or less. The hard segment includes a polyester comprising an aromatic dicarboxylic acid, which includes a naphthalenedicarboxylic acid, and an aliphatic and/or alicyclic diol as constituent components. The soft segment is at least one selected from an aliphatic polyether, an aliphatic polyester, and an aliphatic polycarbonate. The soft segment content in the thermoplastic polyester elastomer (A) is 5 to 22 mass%.

## Description

### TECHNICAL FIELD

The present invention relates to a thermoplastic polyester elastomer that is excellent in fuel barrier properties, heat aging resistance, oil resistance, and flexibility, and a molded article thereof. The present invention also relates to a thermoplastic polyester elastomer used for a tubular molded article such as a tube or a hose.

### BACKGROUND ART

Polyester elastomers have excellent flexibility, heat resistance, oil resistance, chemical resistance, mechanical properties, electrical properties, and the like, and thus are widely used in various applications, including electric and electronic parts, automobile and other mechanical parts, office automation equipment, electrical household appliances, and other products and parts. In applications for tubular molded articles such as tubes and hoses, polyester elastomers are particularly used because, in addition to the above properties, they offer ease of molding owing to their thermoplastic nature.

Examples of tubular hoses or tubes include those having a tubular multilayer structure comprising layers such as an inner layer, a reinforcing layer, and an outer layer, and those having a single-layer tubular structure. The inner layer, outer layer, and single layer are typically formed of a vulcanized rubber or a thermoplastic resin. The reinforcing layer is typically formed by braiding or spirally winding fibers, steel wires, or stainless steel wires that may be subjected to adhesion treatments such as rubberization. However, when rubber is used for the inner and outer layers, a vulcanization step is required, making the manufacturing process complicated. Furthermore, when a thermoplastic resin is used for the inner and outer layers, there have been problems in that the flexibility is poor and, depending on the resin, the melting point is low and the heat resistance is poor. As a proposal for solving such problems, various hoses are known, including:
a hose having an inner layer formed of a thermoplastic elastomer in which a vulcanized composition of an acrylic group-containing rubber is dispersed in a copolymer elastomer containing polybutylene terephthalate as a hard segment and polytetramethylene glycol and/or polycaprolactone as a soft segment (Patent Document 1); and
a hydraulic piping hose composed of an inner layer formed of a polyamide elastomer or a polyester elastomer, a reinforcing layer, and an outer layer formed of a urethane elastomer.

However, conventional polyester elastomers are poor in water resistance and heat aging resistance, and a polyester elastomer having a surface hardness of 60A to 60D seriously swells and deteriorates when subjected to high-temperature oils and chemicals. A polyamide elastomer is poor in flexibility and seriously swells when subjected to high-temperature oils and chemicals. In the case of a polyurethane elastomer, swelling caused by oil is somewhat less compared with other elastomers, but it has a problem of low softening temperature. Therefore, conventional thermoplastic elastomers have not been able to satisfy recent market demands.

As a solution to these problems, a hose using a polyester elastomer containing a naphthalenedicarboxylic acid as an acid component in the hard segment has been proposed (Patent Document 2).

### CITATION LIST

### PATENT DOCUMENTS

Patent Document 1: JP-A-H6-64102
Patent Document 2: JP-A-2000-95848

### SUMMARY OF THE INVENTION

### PROBLEMS TO BE SOLVED BY THE INVENTION

Incidentally, with recent tightening up of VOC emission regulations, materials for fuel hoses are further required to have a suppressed permeation of fuel evaporation gas, and at the same time, the requirement for heat aging resistance to prevent fuel leakage from a deteriorated hose has become exacting. Moreover, further improvements in performance, including suppression of swelling caused by fuel, are required. However, these problems have not been sufficiently studied in the above polyester elastomers.

The present invention has been made in view of the above-mentioned circumstances of the conventional art. An object of the present invention is to provide a polyester elastomer resin composition capable of forming a tubular molded article that suppresses the permeation of fuel evaporation gas while exhibiting excellent heat aging resistance, oil resistance, and flexibility (especially low-temperature flexibility).

### SOLUTION TO THE PROBLEMS

The present inventors conducted intensive studies to solve the above problems, and, as a result, have found that, in a polyester elastomer resin composition containing a naphthalenedicarboxylic acid component in a hard segment, all of the above problems are solved by adjusting a soft segment ratio and a MFR to predetermined ranges. The present invention has been completed based on this finding.

That is, the present invention is configured as follows.
[1] A polyester elastomer resin composition comprising a thermoplastic polyester elastomer (A),
   wherein the thermoplastic polyester elastomer (A) comprises a hard segment and a soft segment that are bonded to each other, the hard segment comprising a polyester containing an aromatic dicarboxylic acid and an aliphatic and/or alicyclic diol as constituent components, the soft segment being at least one selected from the group consisting of an aliphatic polyether, an aliphatic polyester, and an aliphatic polycarbonate,
   wherein the hard segment comprises a naphthalenedicarboxylic acid component as the aromatic dicarboxylic acid component, and
   wherein a content of the soft segment in the thermoplastic polyester elastomer (A) is 5 to 22 mass%.
[2] The polyester elastomer resin composition according to [1], wherein the resin composition has a melt flow rate (MFR) of 15 g/10 min or less, as measured at a measurement temperature of 250°C and a load of 2.16 kg.
[3] The polyester elastomer resin composition according to [1] or [2],
   wherein the hard segment comprises a 2,6-naphthalenedicarboxylic acid component as the aromatic dicarboxylic acid component, and
   wherein an amount of the 2,6-naphthalenedicarboxylic acid component is 85 mol% or more in a total of 100 mol% of all dicarboxylic acid components constituting the hard segment.
[4] The polyester elastomer resin composition according to any one of [1] to [3],
   wherein the aliphatic and/or alicyclic diol component constituting the hard segment is the aliphatic diol component, and
   wherein the aliphatic diol component is an alkylene glycol component having 2 to 8 carbon atoms.
[5] The polyester elastomer resin composition according to any one of [1] to [4],
   wherein the hard segment comprises a butylene naphthalate unit,and
   wherein a content of the butylene naphthalate unit in the polyester constituting the hard segment is 80 mass% or more.
[6] The polyester elastomer resin composition according to any one of [1] to [5], wherein the soft segment is the aliphatic polyether.
[7] The polyester elastomer resin composition according to [6], wherein the aliphatic polyether is at least one selected from the group consisting of poly(tetramethylene oxide)glycol and an ethylene oxide adduct of poly(propylene oxide)glycol.
[8] The polyester elastomer resin composition according to any one of [1] to [7],
   wherein the resin composition comprises a thickener (B), and
   wherein the thickener (B) has at least one functional group capable of reacting with a terminal group of the thermoplastic polyester elastomer (A).
[9] The polyester elastomer resin composition according to [8], wherein the functional group is at least one selected from the group consisting of an epoxy group, an acid anhydride group, a carbodiimide group, and an isocyanate group.
[10] The polyester elastomer resin composition according to [8], wherein the thickener (B) is a polyfunctional epoxy compound and/or a polycarbodiimide compound.
[11] The polyester elastomer resin composition according to [8], wherein the thickener (B) is at least one selected from the group consisting of a difunctional epoxy compound, a trifunctional epoxy compound, and a polycarbodiimide compound having 5 to 30 carbodiimide groups per molecule.
[12] A tubular molded article comprising at least one layer formed from the polyester elastomer resin composition according to any one of [1] to [11].
[13] The tubular molded article according to [12],
   wherein the tubular molded article further comprises a layer formed from a thermoplastic polyester elastomer (C) other than the thermoplastic polyester elastomer (A),
   wherein the thermoplastic polyester elastomer (C) comprises a hard segment and a soft segment that are bonded to each other, the hard segment comprising a polyester containing terephthalic acid and an aliphatic and/or alicyclic diol as constituent components, the soft segment being at least one selected from the group consisting of an aliphatic polyether, an aliphatic polyester, and an aliphatic polycarbonate.
[14] A hose comprising at least one layer formed from the polyester elastomer resin composition according to any one of [1] to [11].
[15] A fuel tube comprising at least one layer formed from the polyester elastomer resin composition according to any one of [1] to [11].
[16] A hose formed from the polyester elastomer resin composition according to any one of [1] to [11].
[17] A fuel tube formed from the polyester elastomer resin composition according to any one of [1] to [11].

### ADVANTAGEOUS EFFECTS OF THE INVENTION

The polyester elastomer resin composition of the present invention has enhanced fuel evaporation gas barrier properties (hereinafter, may be simply referred to as "fuel barrier properties"), enhanced heat aging resistance, enhanced oil resistance, and enhanced flexibility (especially low-temperature flexibility), and therefore can be used for a tubular molded body such as a fuel tube.

### DESCRIPTION OF EMBODIMENTS

Hereinafter, the polyester elastomer resin composition of the present invention will be described in detail.

### [Thermoplastic Polyester Elastomer (A)]

The thermoplastic polyester elastomer (A) is formed by bonding a hard segment and a soft segment. The hard segment comprises a polyester containing an aromatic dicarboxylic acid and an aliphatic and/or alicyclic diol as constituent components.

The hard segment contains a naphthalenedicarboxylic acid component as the aromatic dicarboxylic acid component. This allows the fuel barrier properties to enhance, and also heat resistance, water resistance, heat aging resistance, oil resistance, and chemical resistance to enhance. Specific examples of the naphthalenedicarboxylic acid that is the constituent component include 2,3-naphthalenedicarboxylic acid, 1,5-naphthalenedicarboxylic acid, and 2,6-naphthalenedicarboxylic acid. Among these, 2,6-naphthalenedicarboxylic acid is preferable.

The content of the naphthalenedicarboxylic acid (preferably 2,6-naphthalenedicarboxylic acid) component is, for example, 50 mol% or more, preferably 70 mol% or more, even more preferably 80 mol% or more, still more preferably 85 mol% or more, and particularly preferably 90 mol% or more, in a total of 100 mol% of all dicarboxylic acid components constituting the polyester of the hard segment.

The naphthalenedicarboxylic acid component is, for example, introduced by ester synthesis using a naphthalenedicarboxylic acid, a salt thereof, or a naphthalenedicarboxylic acid ester as a raw material. It is preferable to use a naphthalenedicarboxylic acid ester as the raw material. Examples of the naphthalenedicarboxylic acid ester include a monoalkyl ester of naphthalenedicarboxylic acid, and a dialkyl ester of naphthalenedicarboxylic acid. A diester of naphthalenedicarboxylic acid and an alkyl alcohol having 1 to 4 carbon atoms is preferable, and naphthalenedicarboxylic acid dimethyl ester is more preferable.

The hard segment may contain a component derived from a dicarboxylic acid other than naphthalenedicarboxylic acids (hereinafter referred to as other dicarboxylic acid). Examples of the other dicarboxylic acid that is the constituent component include aromatic dicarboxylic acids other than naphthalenedicarboxylic acids, such as terephthalic acid, diphenyldicarboxylic acid, isophthalic acid, and sodium 5-sulfoisophthalate; alicyclic dicarboxylic acids such as cyclohexanedicarboxylic acid and cyclohexenedicarboxylic acid; and aliphatic dicarboxylic acids such as succinic acid, glutaric acid, adipic acid, azelaic acid, sebacic acid, dodecanedioic acid, dimer acid, and hydrogenated dimer acid. These components can be used to such an extent that they do not cause significant decrease in the melting point of the thermoplastic polyester elastomer (A). The dicarboxylic acid (component) constituting the polyester may be used alone or in combination of two or more. The other dicarboxylic acid component may be introduced by, for example, ester synthesis using other dicarboxylic acid(s), other dicarboxylic acid ester(s), other dicarboxylic acid salt(s), or other dicarboxylic acid anhydride(s) as a raw material.

In the thermoplastic polyester elastomer (A), as the aliphatic or alicyclic diol that is a component constituting the polyester of the hard segment, a common aliphatic or alicyclic diol is widely used. The aliphatic diol that is the constituent component is not particularly limited, but examples thereof include aliphatic glycols such as alkylene glycols (for example, ethylene glycol, 1,2-propylene glycol, 1,3-propylene glycol, 1,4-butanediol, and 1,6-hexanediol). The alicyclic diol that is the constituent component is not particularly limited, but examples thereof include alicyclic glycols such as 1,4-cyclohexanedimethanol and 1,4-cyclohexanediol. These diols (components) may be used alone or in combination of two or more.

The aliphatic and/or alicyclic diol (component) are preferably the aliphatic diol, more preferably an alkylene glycol having 2 to 8 carbon atoms, and even more preferably an alkylene glycol having 2 to 4 carbon atoms. More specifically, at least one selected from the group consisting of ethylene glycol, 1,2-propylene glycol, 1,3-propylene glycol, 1,4-butanediol, 1,6-hexanediol, and 1,4-cyclohexanedimethanol is preferable, at least one selected from the group consisting of ethylene glycol, 1,3-propylene glycol, 1,4-butanediol, 1,6-hexanediol, and 1,4-cyclohexanedimethanol is more preferable, and ethylene glycol and/or 1,4-butanediol are even more preferable.

As a unit constituting the polyester of the hard segment, a butylene naphthalate unit (for example, a unit composed of 2,6-naphthalenedicarboxylic acid and 1,4-butanediol) is particularly preferable from the viewpoints of physical properties, moldability, and cost performance. The content of the butylene naphthalate unit in the polyester constituting the hard segment is preferably 50 to 100 mass%, more preferably 70 mass% or more, even more preferably 80 mass% or more, and particularly preferably 90 mass% or more.

The thermoplastic polyester elastomer (A) may be produced by previously producing an aromatic polyester suitable as a polyester constituting a hard segment, and then copolymerizing it with a soft segment component. In this case, the aromatic polyester can be easily produced according to a conventional polyester production method. The aromatic polyester preferably has a number average molecular weight of 4,000 to 100,000.

The soft segment of the thermoplastic polyester elastomer (A) is at least one selected from the group consisting of an aliphatic polyether, an aliphatic polyester, and an aliphatic polycarbonate.

Examples of the aliphatic polyether constituting the soft segment include a polyether having one or two or more of alkanediols having 2 to 10 carbon atoms as a constituent unit, such as poly(ethylene oxide)glycol, poly(propylene oxide)glycol, poly(tetramethylene oxide)glycol (sometimes referred to as polytetramethylene glycol), poly(hexamethylene oxide)glycol, a copolymer of ethylene oxide with propylene oxide, an ethylene oxide adduct of poly(propylene oxide)glycol, and a copolymer of ethylene oxide with tetrahydrofuran. Among these, at least one selected from the group consisting of poly(tetramethylene oxide)glycol and an ethylene oxide adduct of poly(propylene oxide)glycol is preferred in terms of elastic properties.

The aliphatic polyether (preferably poly(tetramethylene oxide)glycol) constituting the soft segment preferably has a number average molecular weight of 500 or more, more preferably 800 or more, and even more preferably 1000 or more, in order to impart good elastomeric properties. If the compatibility with the hard segment component is reduced, it may become difficult to achieve block copolymerization. From the viewpoint of enhancing the compatibility with the hard segment component, the aliphatic polyether (preferably poly(tetramethylene oxide)glycol) preferably has a number average molecular weight of 4000 or less, more preferably 3000 or less, and even more preferably 2500 or less. That is, the number average molecular weight of the aliphatic polyether (preferably poly(tetramethylene oxide)glycol) is preferably 500 to 4000, more preferably 800 to 3000, and even more preferably 1000 to 2500.

Examples of the aliphatic polyester constituting the soft segment include an aliphatic polyester having an ester group and an alkylene group having 2 to 12 carbon atoms that are repeated, such as poly(ε-caprolactone), polyenantholactone, polycaprylolactone, and polybutylene adipate. Among these, at least one selected from the group consisting of poly(ε-caprolactone) and polybutylene adipate is preferred in terms of elastic properties.

The aliphatic polyester preferably has a number average molecular weight of 300 or more, more preferably 500 or more, and even more preferably 700 or more, in order to impart good elastomeric properties. From the viewpoint of enhancing the compatibility with the hard segment component, the aliphatic polyester preferably has a number average molecular weight of 5000 or less, more preferably 4000 or less, and even more preferably 2000 or less. That is, the number average molecular weight of the aliphatic polyester is preferably 300 to 5000, more preferably 500 to 4000, and even more preferably 700 to 2000.

The aliphatic polycarbonate constituting the soft segment may be a resin comprising a carbonic acid unit and an aliphatic diol unit, and preferably contains mainly an aliphatic diol residue having 2 to 12 carbon atoms. Examples of the aliphatic diol include ethylene glycol, 1,2-propylene glycol, 1,3-propylene glycol, 1,4-butanediol, 1,5-pentanediol, 1,6-hexanediol, 1,8-octanediol, 2,2-dimethyl-1,3-propanediol, 3-methyl-1,5-pentanediol, 2,4-diethyl-1,5-pentanediol, 1,9-nonanediol, and 2-methyl-1,8-octanediol. In particular, an aliphatic diol having 5 to 12 carbon atoms is preferable in order to further enhance the flexibility or low-temperature characteristics of the thermoplastic polyester elastomer (A) to be obtained. These components may be used alone or in combination of two or more as needed.

The aliphatic polycarbonate preferably has a number average molecular weight of 5000 or more, more preferably 7000 or more, and even more preferably 10000 or more. The upper limit of the number average molecular weight of the aliphatic polycarbonate is preferably 80000 or less, more preferably 70000 or less, and even more preferably 60000 or less, from the viewpoint of compatibility between the hard segment and the soft segment. When the molecular weight of the aliphatic polycarbonate is too high, the compatibility may decrease, leading to phase separation, which can significantly affect the mechanical properties of a molded article and result in reductions in its strength and elongation. That is, the number average molecular weight of the aliphatic polycarbonate is preferably 5000 to 80000, more preferably 7000 to 70000, and even more preferably 10000 to 60000.

From the viewpoint of further enhancing the low-temperature characteristics, the aliphatic polycarbonate constituting the soft segment of the thermoplastic polyester elastomer (A) preferably has a low melting point (e.g., 70°C or lower) and a low glass transition temperature (e.g., -40°C or lower). An aliphatic polycarbonate composed of a carbonic acid unit and a 1,6-hexanediol unit, which is commonly used to form a soft segment of a thermoplastic polyester elastomer, has a low glass transition temperature of about -60°C and a melting point of about 50°C, and therefore exhibits good low-temperature characteristics. In addition, an aliphatic polycarbonate obtained by copolymerizing, for example, an appropriate amount of 3-methyl-1,5-pentanediol with the above-mentioned aliphatic polycarbonate has a slightly higher glass transition point than that of the original aliphatic polycarbonate, but has a lower melting point or is amorphous, and therefore exhibits good low-temperature characteristics. For example, an aliphatic polycarbonate composed of a carbonic acid unit, a 1,9-nonanediol unit, and a 2-methyl-1,8-octanediol unit has a melting point of about 30°C and a glass transition temperature of about -70°C, which are sufficiently low, and therefore exhibits good low-temperature characteristics.

The soft segment of the thermoplastic polyester elastomer (A) is preferably the aliphatic polyether from the viewpoint of further enhancing fuel barrier properties, heat aging resistance, oil resistance, and flexibility.

The content of the soft segment in the thermoplastic polyester elastomer (A) is 5 mass% or more, and preferably 10 mass% or more. By adjusting the content of the soft segment to the above range, it is possible to suppress an excessive increase in crystallinity and to further improve flexibility (especially low-temperature flexibility), thereby making permanent deformation less likely to occur. The content of the soft segment in the thermoplastic polyester elastomer (A) is 22 mass% or less, preferably 20 mass% or less, more preferably 18 mass% or less, and may be 17.0 mass% or less. By adjusting the content of the soft segment to the above range, the fuel barrier properties and oil resistance can be further enhanced, and furthermore, appropriate crystallinity can be imparted. That is, the content of the soft segment in the thermoplastic polyester elastomer (A) is 5 to 22 mass%, preferably 10 to 20 mass%, more preferably 10 to 18 mass%, and may be 10 to 17.0 mass%.

In order to achieve particularly excellent heat resistance and tear strength, the content of the hard segment in the thermoplastic polyester elastomer (A) is preferably 78 to 95 mass%, more preferably 80 to 90 mass%, even more preferably 82 to 90 mass%, and may be 83.0 to 90 mass%.

The thermoplastic polyester elastomer (A) may be used alone or in combination of two or more types.

The lower limit of the melting point of the thermoplastic polyester elastomer (A) is not particularly limited, but it is generally preferably 150°C or higher, and more preferably 180°C or higher in order to improve properties (e.g., tensile strength at break, tear strength, and puncture strength) in the high temperature range. The upper limit of the melting point of the thermoplastic polyester elastomer (A) is also not particularly limited, but it is preferably 260°C or lower, and more preferably 240°C or lower from the viewpoint of moldability. That is, the melting point of the thermoplastic polyester elastomer (A) is preferably 150 to 260°C, and more preferably 180 to 240°C. The melting point can be measured by the method as described in Examples below.

When the thermoplastic polyester elastomer (A) contains two or more types of thermoplastic polyester elastomers, multiple melting points may be observed. In this case, the melting point of the thermoplastic polyester elastomer (A) may be determined as follows.

When two or more types of thermoplastic polyester elastomers are contained, there are multiple melting points, and the difference between the maximum and minimum values of the multiple melting points is within 15°C, the weighted average value of the multiple melting points may be taken as the melting point of the thermoplastic polyester elastomer (A).

When two or more types of thermoplastic polyester elastomers are contained, there are multiple melting points, and the difference between the maximum and minimum values of the multiple melting points exceeds 15°C, the highest melting point may be taken as the melting point of the thermoplastic polyester elastomer (A).

The thermoplastic polyester elastomer (A) preferably has a reduced viscosity of 1.0 dl/g or more, more preferably 1.2 dl/g or more from the viewpoint of enhancing durability including heat aging resistance or the like. From the viewpoint of processability, the thermoplastic polyester elastomer (A) preferably has a reduced viscosity of 4.0 dl/g or less, and more preferably 3.7 dl/g or less. That is, the reduced viscosity of the thermoplastic polyester elastomer (A) is preferably 1.0 to 4.0 dl/g, more preferably 1.2 to 3.7 dl/g. The reduced viscosity can be measured by the method as described in Examples below.

The polyester elastomer resin composition of the present invention preferably contains the thermoplastic polyester elastomer (A) as a main component. In the polyester elastomer resin composition, the content of the thermoplastic polyester elastomer (A) is preferably 50 mass% or more, more preferably 80 mass% or more, even more preferably 90 mass% or more, and particularly preferably 95 mass% or more. The upper limit of the content is not particularly limited, but may be 100 mass% or may be 99 mass% or less.

The composition and composition ratio of the polyester elastomer resin composition may be determined by calculating from the amounts of raw materials used, or can also be determined by calculating from the integral ratio of protons in ¹H-NMR measured using a sample dissolved in a solvent such as deuterated chloroform.

The thermoplastic polyester elastomer (A) can be produced by known methods. For example, any method of the following methods may be adopted for producing the thermoplastic polyester elastomer (A): a method in which a diester formed from a dicarboxylic acid with a lower alcohol, a diol, and a soft segment component are subjected to transesterification in the presence of a catalyst, and the resulting reaction product is subjected to polycondensation; a method in which a dicarboxylic acid, a diol, and a soft segment component are subjected to esterification in the presence of a catalyst, and the resulting reaction product is subjected to polycondensation; a method in which a polyester for the hard segment is prepared beforehand, and a soft segment component is added to this polyester to randomize the mixture by transesterification; a method in which the hard segment and the soft segment are linked using a chain linking agent; and when poly(ε-caprolactone) is used for the soft segment, a method in which an addition reaction of a ε-caprolactone monomer with the hard segment is performed.

The catalyst used in the reaction of the thermoplastic polyester elastomer (A) is preferably at least one selected from the group consisting of an antimony catalyst, a germanium catalyst, and a titanium catalyst. A titanium catalyst, or more specifically, a tetraalkyl titanate such as tetrabutyl titanate or tetramethyl titanate, and a metal oxalate such as potassium titanium oxalate are particularly preferable. The other catalysts are not particularly limited as long as they are known catalysts, and examples thereof include a tin compound such as dibutyltin oxide and dibutyltin dilaurate, and a lead compound such as lead acetate.

The polyester elastomer resin composition of the present invention may contain one or two or more types of resins different from the thermoplastic polyester elastomer (A) (hereinafter, sometimes referred to as "other resins"). Examples of the other resins include a polyolefin-based resin, a polyvinyl chloride-based resin, a polyamide-based resin, a polyester-based resin, and a thermoplastic elastomer resin other than the thermoplastic polyester elastomer (A). Among these, a polyester-based resin is preferable.

The polyester-based resin is preferably a polyester containing an aromatic dicarboxylic acid and an aliphatic and/or alicyclic diol as constituent components.

Examples of the aromatic dicarboxylic acid include terephthalic acid, naphthalenedicarboxylic acid, diphenyldicarboxylic acid, isophthalic acid, and sodium 5-sulfoisophthalate. Among these, terephthalic acid and naphthalenedicarboxylic acid are preferable, and naphthalenedicarboxylic acid is more preferable.

The polyester-based resin may have a component derived from a dicarboxylic acid other than the aromatic dicarboxylic acid, and examples of the dicarboxylic acid that is the constituent component include alicyclic dicarboxylic acids such as cyclohexane dicarboxylic acid and cyclohexene dicarboxylic acid; and aliphatic dicarboxylic acids such as succinic acid, glutaric acid, adipic acid, azelaic acid, sebacic acid, dodecanedioic acid, dimer acid, and hydrogenated dimer acid.

The content of the aromatic dicarboxylic acid component is, for example, 50 mol% or more, preferably 70 mol% or more, more preferably 80 mol% or more, even more preferably 85 mol% or more, and particularly preferably 90 mol% or more, in a total of 100 mol% of all dicarboxylic acid components constituting the polyester resin.

Examples of the aliphatic or alicyclic diol are the same as those described for the examples of the aliphatic or alicyclic diol that is a component constituting the polyester of the hard segment in the thermoplastic polyester elastomer (A), and preferred embodiments thereof are also the same.

The content of the aliphatic and alicyclic diol components is, for example, 50 mol% or more, preferably 70 mol% or more, more preferably 80 mol% or more, even more preferably 85 mol% or more, and particularly preferably 90 mol% or more, in a total of 100 mol% of all diol components constituting the polyester resin.

In particular, the polyester-based resin preferably contains a butylene terephthalate unit (e.g., a unit composed of terephthalic acid and 1,4-butanediol) and/or a butylene naphthalate unit (e.g., a unit composed of naphthalenedicarboxylic acid and 1,4-butanediol), and more preferably contains a butylene naphthalate unit.

When the polyester elastomer resin composition of the present invention contains other resins, the content of the other resins is preferably 1 to 50 parts by mass, and more preferably 5 to 35 parts by mass, relative to 100 parts by mass of the thermoplastic polyester elastomer (A).

### [Thickener (B)]

The polyester elastomer resin composition of the present invention may further contain a thickener (B). The thickener (B) is a reactive compound having a functional group capable of reacting with the hydroxy group or the carboxy group of the thermoplastic polyester elastomer (A). When the thickener (B) has a functional group capable of reacting with the hydroxy group or the carboxy group, the molecular chain of the thermoplastic polyester elastomer (A) can be extended, and the melt flow rate of the polyester elastomer resin composition can be decreased.

The functional group is preferably at least one selected from the group consisting of an epoxy group (preferably a glycidyl group), an acid anhydride group, a carbodiimide group, and an isocyanate group, more preferably at least one selected from the group consisting of an epoxy group (preferably a glycidyl group) and a carbodiimide group, and even more preferably an epoxy group (preferably a glycidyl group). The thickener (B) preferably has two or more functional groups, more preferably 2 to 50 functional groups, and even more preferably 2 to 20 functional groups, per molecule.

When the thickener (B) is a compound having an epoxy group, the thickener (B) is preferably a polyfunctional epoxy compound having two or more epoxy groups. Specific examples of the polyfunctional epoxy compound include a difunctional epoxy compound having two epoxy groups in one molecule, such as 1,6-dihydroxy naphthalene diglycidyl ether and 1,3-bis(oxiranylmethoxy)benzene; a trifunctional epoxy compound having three epoxy groups in one molecule, such as 1,3,5-tris(2,3-epoxypropyl)-1,3,5-triazine-2,4,6(1H,3H,5H)-trione and diglycerol triglycidyl ether; and a tetrafunctional epoxy compound having four epoxy groups in one molecule, such as 1-chloro-2,3-epoxypropane/formaldehyde/2,7-naphthalene diol polycondensation product and pentaerythritol tetraglycidyl ether. Among these, from the viewpoint of heat resistance, a difunctional or tetrafunctional epoxy compound having a naphthalene structure in the skeleton, or a trifunctional epoxy compound having a triazine structure in the skeleton are preferable. Considering the effect of appropriately increasing the solution viscosity of the thermoplastic polyester elastomer (A) to an extent such that gelation does not occur, the effect of efficiently reducing the acid value of the thermoplastic polyester elastomer (A), and the effect of suppressing the generation of gel due to aggregation and solidification of the epoxy itself, a difunctional or trifunctional epoxy compound is preferable.

Other examples of the thickener (B) having an epoxy group include a copolymer containing two or more glycidyl groups per molecule, having a weight average molecular weight of 4000 to 25000, and being composed of 20 to 99 mass% of a vinyl aromatic monomer (X), 1 to 80 mass% of an epoxy group-containing (meth)acrylate (Y), and 0 to 79 mass% of a vinyl group-containing monomer containing no epoxy group (Z) and being other than (X).

The copolymer is preferably a copolymer composed of 20 to 99 mass% of (X), 1 to 80 mass% of (Y), and 0 to 79 mass% of (Z), more preferably a copolymer composed of 20 to 99 mass% of (X), 1 to 80 mass% of (Y), and 0 to 40 mass% of (Z), and even more preferably a copolymer composed of 25 to 90 mass% of (X), 10 to 75 mass% of (Y), and 0 to 35 mass% of (Z). Since these compositions affect the concentration of the functional group that contributes to the reaction with the thermoplastic polyester elastomer (A), it is preferable to suitably control the compositions within the range described above.

Examples of the vinyl aromatic monomer (X) include a styrene-based monomer such as styrene and α-methylstyrene; a (meth)acrylic acid aryl ester such as phenyl (meth)acrylate; a (meth)acrylic acid aralkyl ester such as benzyl (meth)acrylate; and a (meth)acrylic acid phenoxyalkyl ester such as phenoxyethyl (meth)acrylate. Use of the styrene-based monomer as the vinyl aromatic monomer (X) is preferable in that it improves compatibility with the thermoplastic polyester elastomer (A) and broadens the molecular weight distribution of the resulting polyester elastomer resin composition.

Examples of the epoxy group-containing (meth)acrylate (Y) include glycidyl (meth)acrylate, a (meth)acrylic acid ester having a cyclohexene oxide structure, and (meth)acryl glycidyl ether. Among these, glycidyl (meth)acrylate is preferred in terms of high reactivity.

Examples of the other vinyl group-containing monomer (Z) include a (meth)acrylic acid alkyl ester having an alkyl group (which may be either linear or branched chain) having 1 to 22 carbon atoms such as methyl (meth)acrylate, ethyl (meth)acrylate, propyl (meth)acrylate, butyl (meth)acrylate, 2-ethylhexyl (meth)acrylate, cyclohexyl (meth)acrylate, stearyl (meth)acrylate, and methoxyethyl (meth)acrylate; (meth)acrylic acid polyalkylene glycol ester, (meth)acrylic acid alkoxyalkyl ester, (meth)acrylic acid hydroxyalkyl ester, (meth)acrylic acid dialkylaminoalkyl ester, (meth)acrylic acid isobornyl ester, and (meth)acrylic acid alkoxysilylalkyl ester. In addition, (meth)acrylamide, (meth)acryl dialkylamide, vinyl esters such as vinyl acetate, vinyl ethers, and an α-olefin monomer such as ethylene and propylene can also be used as the other vinyl group-containing monomer (Z).

The copolymer preferably has a weight average molecular weight of 4000 to 25000, and more preferably 5000 to 15000. By adjusting the weight average molecular weight to 4000 or more, an unreacted copolymer can be prevented from volatilizing in a molding step or bleeding out onto the surface of a molded article, whereby the occurrence of stains on the surface of the molded article can be suppressed. By adjusting the weight average molecular weight to 25000 or less, a reaction with the thermoplastic polyester elastomer (A) satisfactorily proceeds, and not only an effect of increasing the molecular weight is enhanced, but also the compatibility between the copolymer and the thermoplastic polyester elastomer (A) is improved, so that it is possible to prevent the inherent properties of the thermoplastic polyester elastomer (A), such as heat resistance, from decreasing.

The copolymer preferably has an epoxy value of 400 to 2500 equivalents/1×10⁶ g, more preferably 500 to 1500 equivalents/1×10⁶ g, and even more preferably 600 to 1000 equivalents/1×10⁶ g. By adjusting the epoxy value to 400 equivalents/1×10⁶ g or more, the thickening effect can be further enhanced, while by adjusting the epoxy value to 2500 equivalents/1×10⁶ g or less, the thickening effect can be prevented from becoming excessive and adversely affecting moldability.

When the thickener (B) is a compound having a carbodiimide group, a polycarbodiimide compound can be suitably used. The polycarbodiimide compound is advantageous in that it efficiently reduces the acid value.

The polycarbodiimide compound may be a polycarbodiimide having two or more carbodiimide groups (structure of -N=C=N-) in a molecule, and examples thereof include an aliphatic polycarbodiimide derived from an aliphatic diisocyanate, an alicyclic polycarbodiimide derived from an alicyclic diisocyanate, an aromatic polycarbodiimide derived from an aromatic diisocyanate, and copolymers thereof. The polycarbodiimide compound is preferably an aliphatic polycarbodiimide or an alicyclic polycarbodiimide.

The polycarbodiimide compound can be prepared, for example, by a decarboxylation reaction of a diisocyanate compound. Examples of the diisocyanate compound that can be used herein include aromatic diisocyanates such as 4,4'-diphenylmethane diisocyanate, 4,4'-diphenyldimethylmethane diisocyanate, 1,3-phenylene diisocyanate, 1,4-phenylene diisocyanate, 2,4-tolylene diisocyanate, 2,6-tolylene diisocyanate, 1,5-naphthylene diisocyanate, xylylene diisocyanate, tetramethylxylylene diisocyanate, and 1,3,5-triisopropylphenylene-2,4-diisocyanate; aliphatic diisocyanates such as tetramethylene diisocyanate and hexamethylene diisocyanate; and alicyclic diisocyanates such as dicyclohexylmethane diisocyanate, cyclohexane-1,4-diisocyanate, isophorone diisocyanate, and methylcyclohexane diisocyanate. These compounds may be used alone, or two or more of them may be copolymerized and used. In addition, a branched structure may be introduced, or a functional group other than a carbodiimide group or an isocyanate group may be introduced by means of copolymerization. Furthermore, the terminal isocyanate can be used as it is, but the degree of polymerization may be controlled by reacting the terminal isocyanate, or a part of the terminal isocyanate may be blocked.

As to the polycarbodiimide compound, an alicyclic polycarbodiimide derived from dicyclohexylmethane diisocyanate, cyclohexane-1,4-diisocyanate, isophorone diisocyanate, or the like is preferable, and a polycarbodiimide derived from dicyclohexylmethane diisocyanate or isophorone diisocyanate is particularly preferable.

From the viewpoints of stability and ease of handling, the polycarbodiimide compound preferably contains 2 to 50 carbodiimide groups per molecule, and more preferably contains 5 to 30 carbodiimide groups per molecule. The number of carbodiimide groups (namely a carbodiimide group number) in one molecule of a polycarbodiimide compound corresponds to the degree of polymerization in the case of a polycarbodiimide compound obtained from a diisocyanate compound. For example, the degree of polymerization of a polycarbodiimide compound obtained by linking 21 diisocyanate compounds in a chain form is 20, and the carbodiimide group number in a molecular chain is 20. A polycarbodiimide compound is usually a mixture of molecules having various lengths, and the carbodiimide group number is expressed by a mean value. When a polycarbodiimide compound has a carbodiimide group number within the above range, the compound is likely to become solid at around room temperature, and as a result, can be made into powder. Thus, the compound is excellent in workability and compatibility when mixed with the thermoplastic polyester elastomer (A), and is also preferable in terms of uniform reactivity and bleed-out resistance. The carbodiimide group number can be measured, for example, by a conventional method (a method of dissolving in an amine and performing back titration with hydrochloric acid).

From the viewpoints of stability and ease of handling, the polycarbodiimide compound preferably has an isocyanate group at its terminal, is more preferably a polycarbodiimide compound having an isocyanate group content of 0.5 to 4 mass%, and is even more preferably a polycarbodiimide compound having an isocyanate group content of 1 to 3 mass%. Particularly preferred one is a polycarbodiimide derived from an alicyclic diisocyanate such as dicyclohexylmethane diisocyanate or isophorone diisocyanate and having the isocyanate group content within the above-mentioned range. The isocyanate group content can be measured by a conventional method (a method of dissolving in an amine and performing back titration with hydrochloric acid).

When the thickener (B) is a compound having an isocyanate group, examples of the compound include the above-mentioned polycarbodiimide compound containing an isocyanate group at its terminal, and isocyanate compounds such as aliphatic diisocyanates, alicyclic diisocyanates, and aromatic diisocyanates which are used as raw materials for the above-mentioned polycarbodiimide compound.

When the thickener (B) is a compound having an acid anhydride group, a compound containing 2 to 4 anhydrides per molecule is preferred in terms of stability and ease of handling. Examples of the compound include phthalic anhydride, trimellitic anhydride, and pyromellitic anhydride.

The thickener (B) may be used alone or in combination of two or more types.

The content of the thickener (B) is preferably 0.1 parts by mass or more relative to 100 parts by mass of the thermoplastic polyester elastomer (A). By adjusting the content of the thickener (B) to the above range, an aimed molecular chain extending effect can be achieved. When the melt flow rate of the polyester elastomer resin composition is within the predetermined range, the content of the thickener (B) may be 0 parts by mass.

In addition, the content of the thickener (B) is preferably 4.5 parts by mass or less, more preferably 4 parts by mass or less, even more preferably 3 parts by mass or less, and particularly preferably 2 parts by mass or less, relative to 100 parts by mass of the thermoplastic polyester elastomer (A). By adjusting the content of the thickener (B) to the above range, the thickening effect can be prevented from becoming excessive, and the moldability and mechanical properties can be improved. When the thickener (B) is the compound having an epoxy group, by adjusting the content of the thickener (B) to the above range, it is possible to suppress the occurrence of unevenness on the surface of a molded article due to aggregation and curing of the compound having an epoxy group. When the thickener (B) is the compound having a carbodiimide group, by adjusting the content of the thickener (B) to the above range, it is possible to suppress causing hydrolysis of the thermoplastic polyester elastomer (A) due to the basicity of the compound having a carbodiimide group, and thereby adversely affecting the mechanical properties. That is, the content of the thickener (B) is preferably 0 to 4.5 parts by mass, more preferably 0.1 to 4 parts by mass, even more preferably 0.1 to 3 parts by mass, and particularly preferably 0.1 to 2 parts by mass, relative to 100 parts by mass of the thermoplastic polyester elastomer (A).

### [Additives]

The polyester elastomer resin composition of the present invention may contain one or more types of known additives as long as the effect of the present invention is not inhibited. Examples of the additives include hindered phenol-type, sulfur-type, and phosphorus-type antioxidants; hindered amine-type, triazole-type, benzophenone-type, benzoate-type, nickel-type, and salicyl-type light stabilizers; a release agent; an antistatic agent; a lubricant; a molecular weight regulator such as a peroxide; a metal deactivator; organic and inorganic nucleating agents; a neutralizer; an antacid; an antibacterial agent; a fluorescent brightener; an inorganic fibrous material such as glass fiber, carbon fiber, silica fiber, and alumina fiber; a powdered and granular filler such as carbon black, silica, quartz powder, glass beads, glass powder, a silicate (for example, calcium silicate, kaolin, talc, clay, diatomaceous earth, and wollastonite), a metal oxide (for example, iron oxide, titanium oxide, zinc oxide, and alumina), a metal carbonate (for example, calcium carbonate and barium carbonate), and other various metal powders; a tabular filler such as mica, glass flakes, and various metal powders; a flame retardant; a flame retardant aid; and organic and inorganic pigments.

The amount of the additive may be appropriately adjusted depending on the type of additive, but is, for example, 0.01 parts by mass or more or 0.5 parts by mass or more, and for example, 10 parts by mass or less, preferably 5 parts by mass or less, and more preferably 3 parts by mass or less, relative to 100 parts by mass of the thermoplastic polyester elastomer (A). That is, the amount of the additive may be 0.01 to 10 parts by mass, 0.5 to 5 parts by mass, or 0.5 to 3 parts by mass, relative to 100 parts by mass of the thermoplastic polyester elastomer (A).

The polyester elastomer resin composition of the present invention has a melt flow rate (MFR) of 15 g/10 min or less, preferably 12 g/10 min or less, and more preferably 10 g/10 min or less, as measured at a measurement temperature of 250°C and a load of 2.16 kg. By adjusting the MFR of the polyester elastomer resin composition to the above range, the heat aging resistance can be enhanced, and the moldability into a tubular molded article can be also enhanced. The MFR of the polyester elastomer resin composition can be reduced by increasing the molecular weight or reduced viscosity of the thermoplastic polyester elastomer (A) contained therein, or by adding the thickener (B) to the resin composition.

The lower limit of the MFR of the polyester elastomer resin composition of the present invention is not particularly limited, but since the MFR that is too small tends to make extrusion molding difficult, the lower limit of the MFR is preferably 1 g/10 min or more.

The polyester elastomer resin composition of the present invention can be obtained by mixing the thermoplastic polyester elastomer (A) and, if necessary, the thickener (B), an additive, and other resins. For mixing, it is preferable to melt-knead them using a twin-screw extruder. After mixing, the mixture may be pelletized.

The polyester elastomer resin composition of the present invention can be suitably used for a tubular molded article such as a hose and a tube. The tubular molded article of the present invention may have at least one layer formed from the above-mentioned polyester elastomer resin composition, and may have a single-layer structure or a multi-layer structure.

For example, the polyester elastomer resin composition may be extruded using an extruder, and the resulting molten tube may be allowed to pass through a sizing die to produce a tubular molded article having a single-layer structure.

Alternatively, an inner layer material and an outer layer material may be separately prepared, and the materials for these layers may be co-extruded, for example, using an extruder, and the resulting molten tube may be allowed to pass through a sizing die to produce a two-layered tubular molded article in which the outer layer is formed on the outer circumferential surface of the inner layer. Alternatively, one or two or more types of intermediate layer materials together with the inner layer material and the outer layer material may be co-extruded in the same manner as described above, and the resulting molten tube may be allowed to pass through a sizing die to produce a tubular molded article having a multi-layer structure of three or more layers, in which one or more intermediate layers are formed on the outer circumferential surface of the inner layer, and the outer layer is further formed on the outer circumferential surface of the intermediate layers. By performing the melt extrusion (coextrusion) in this manner, good adhesion between the layers is achieved.

In the case of a tubular molded article having a multi-layer structure, the polyester elastomer resin composition of the present invention may be used as a material for forming any of the inner layer, outer layer, and intermediate layer of the tubular molded article, but it is preferable to use it as materials for forming the inner layer and/or the outer layer, and it is more preferable to use it as a material for forming at least the inner layer. In the case of a tubular molded article having a multi-layer structure, the tubular molded article may have only layers formed from the polyester elastomer resin composition of the present invention, or it may have a layer formed from the polyester elastomer resin composition of the present invention and other layers. When a plurality of layers are formed from the polyester elastomer resin composition of the present invention, the respective polyester elastomer resin compositions of the layers may be the same or different from each other. For example, the thermoplastic polyester elastomers (A) contained in the respective resin compositions may have different soft segment ratios or may have different components constituting the soft segments and/or the hard segments.

When the tubular molded article of the present invention has a layer other than the layer formed from the above-mentioned polyester elastomer resin composition, the layer can be formed using a resin composition (hereinafter, sometimes referred to as "other resin composition") containing a resin such as a polyolefin-based resin, a polyvinyl chloride-based resin, a polyamide-based resin, a polyester-based resin, or a thermoplastic elastomer resin other than the thermoplastic polyester elastomer (A). In particular, from the viewpoint of further improving the gas barrier properties and low-temperature flexibility, it is preferable that the tubular molded article be a tubular molded article having a multi-layer structure in which an inner layer is formed from the polyester elastomer resin composition of the present invention and an outer layer is formed from a resin composition containing a thermoplastic elastomer resin other than the thermoplastic polyester elastomer (A) (in particular, a thermoplastic polyester elastomer other than the thermoplastic polyester elastomer (A)).

The thermoplastic elastomer resin other than the thermoplastic polyester elastomer (A) is preferably a thermoplastic polyester elastomer other than the thermoplastic polyester elastomer (A) (hereinafter, may be referred to as a thermoplastic polyester elastomer (C)). The thermoplastic polyester elastomer (C) is preferably a thermoplastic polyester elastomer in which a hard segment comprising a polyester containing an aromatic dicarboxylic acid other than naphthalenedicarboxylic acids and an aliphatic and/or alicyclic diol as constituent components is bonded to a soft segment being at least one selected from the group consisting of an aliphatic polyether, an aliphatic polyester, and an aliphatic polycarbonate.

Examples of the aromatic dicarboxylic acid constituting the hard segment of the thermoplastic polyester elastomer (C) include terephthalic acid, diphenyldicarboxylic acid, isophthalic acid, and sodium 5-sulfoisophthalate, and among these, terephthalic acid is preferable.

The hard segment may have a dicarboxylic acid component other than the aromatic dicarboxylic acid. Examples of the dicarboxylic acid that is the constituent component include alicyclic dicarboxylic acids such as cyclohexane dicarboxylic acid and cyclohexene dicarboxylic acid; and aliphatic dicarboxylic acids such as succinic acid, glutaric acid, adipic acid, azelaic acid, sebacic acid, dodecanedioic acid, dimer acid, and hydrogenated dimer acid.

The content of the aromatic dicarboxylic acid component is, for example, 50 mol% or more, preferably 70 mol% or more, more preferably 80 mol% or more, even more preferably 85 mol% or more, and particularly preferably 90 mol% or more, in a total of 100 mol% of all dicarboxylic acid components constituting the polyester of the hard segment of the thermoplastic polyester elastomer (C).

Examples of the aliphatic or alicyclic diol that is a component constituting the polyester of the hard segment in the thermoplastic polyester elastomer (C) are the same as those described for the aliphatic or alicyclic diol that is a component constituting the polyester of the hard segment in the thermoplastic polyester elastomer (A), and preferred embodiments thereof are also the same.

As a unit constituting the polyester of the hard segment, a butylene terephthalate unit (for example, a unit composed of terephthalic acid and 1,4-butanediol) is particularly preferable from the viewpoints of physical properties, moldability, and cost performance. The content of the butylene naphthalate unit in the polyester constituting the hard segment is preferably 50 to 100 mass%, more preferably 70 mass% or more, even more preferably 80 mass% or more, and particularly preferably 90 mass% or more.

Examples of the aliphatic polyether, the aliphatic polyester, or the aliphatic polycarbonate constituting the soft segment in the thermoplastic polyester elastomer (C) are the same as those described for the aliphatic polyether, the aliphatic polyester, or the aliphatic polycarbonate constituting the soft segment in the thermoplastic polyester elastomer (A), and preferred embodiments thereof are also the same.

The above other resin composition preferably contains the resin (preferably the thermoplastic polyester elastomer (C)) as a main component. In the polyester elastomer resin composition, the content of the resin is preferably 50 mass% or more, more preferably 80 mass% or more, even more preferably 90 mass% or more, and particularly preferably 95 mass% or more. The upper limit of the content is not particularly limited, but may be 100 mass% or may be 99 mass% or less.

The other resin composition may contain one or more types of known additives as long as the effect of the present invention is not inhibited. Examples of the additives include thickeners; hindered phenol-type, sulfur-type, and phosphorus-type antioxidants; hindered amine-type, triazole-type, benzophenone-type, benzoate-type, nickel-type, and salicyl-type light stabilizers; a release agent; an antistatic agent; a lubricant; a molecular weight regulator such as a peroxide; a metal deactivator; organic and inorganic nucleating agents; a neutralizer; an antacid; an antibacterial agent; a fluorescent brightener; an inorganic fibrous material such as glass fiber, carbon fiber, silica fiber, and alumina fiber; a powdered and granular filler such as carbon black, silica, quartz powder, glass beads, glass powder, a silicate (e.g., calcium silicate, kaolin, talc, clay, diatomaceous earth, and wollastonite), a metal oxide (e.g., iron oxide, titanium oxide, zinc oxide, and alumina), a metal carbonate (e.g., calcium carbonate and barium carbonate), and other various metal powders; a tabular filler such as mica, glass flakes, and various metal powders; a flame retardant; a flame retardant aid; and organic and inorganic pigments.

The amount of the additive may be appropriately adjusted depending on the type of additive, but is, for example, 0.01 parts by mass or more or 0.5 parts by mass or more, and for example, 10 parts by mass or less, preferably 5 parts by mass or less, and more preferably 3 parts by mass or less, relative to 100 parts by mass of the resin. That is, the amount of the additive may be 0.01 to 10 parts by mass, 0.5 to 5 parts by mass, or 0.5 to 3 parts by mass, relative to 100 parts by mass of the resin.

In order to improve the adhesion between the inner layer and the outer layer, between the inner layer and the intermediate layer, or between the intermediate layer and the outer layer, an adhesive such as an alloy material, an isocyanate-based, phenolic resin-based, epoxy resin-based, or urethane-based adhesive may be used. Furthermore, when strict dimensional accuracy of the tubular molded article is required, a mandrel may be used, but need not be used.

The tubular molded article of the present invention may further have a reinforcing layer formed from a reinforcing material, as necessary. The reinforcing layer is preferably formed between the inner layer and the outer layer. In other words, when the tubular molded article of the present invention has a reinforcing layer, it is preferred to form the reinforcing layer on the outer circumferential surface of the inner layer and further form the outer layer on the outer circumferential surface of the reinforcing layer to make the tubular molded article.

The reinforcing material may be either formed in a braid shape or a spiral shape and may be made of a reinforcing yarn or a reinforcing wire. Examples of the reinforcing yarn include yarns made of vinylon fibers, rayon fibers, polyester fibers, nylon fibers, aromatic polyamide fibers, or the like. The reinforcing wire can be, for example, a hard steel wire, and more specifically, can be a steel wire plated with brass or zinc to impart rust prevention and adhesion. Furthermore, there is no particular problem with using an adhesive to improve the adhesion of the reinforcing layer, and examples of such an adhesive include an isocyanate-based, phenolic resin-based, epoxy resin-based, or urethane-based adhesive.

When the tubular molded article is formed into a bellows-like shape, the co-extruded molten tube is allowed to pass through a corrugating machine to produce a tubular molded article in a bellows-like shape having a predetermined size.

The tubular molded article of the present invention has excellent barrier properties against chemical solutions and is therefore suitable for use as a chemical solution transport tube. Examples thereof include a fuel tube (e.g., a feed tube, a return tube, an evaporation tube, a fuel filler tube, an ORVR tube, a reserve tube, or a vent tube), an oil tube, an oil-drilling tube, a brake tube, a tube for window washer liquid, an engine coolant (LLC) tube, a reservoir tank tube, a urea solution transport tube, a cooler tube for cooling water, a cooler tube for refrigerant or the like, a tube for air conditioner refrigerant, a heater tube, a road heating tube, a floor heating tube, an infrastructure supply tube, a tube for a fire extinguisher and fire-extinguishing system, a tube for a cooling machine for medical use, an ink spraying tube, a paint spraying tube, and other chemical solution tubes. In particular, the tubular molded article of the present invention has enhanced fuel barrier properties, enhanced heat aging resistance, enhanced oil resistance, and enhanced flexibility, and therefore, is suitable as a fuel tube.

When the tubular molded article of the present invention is used as a fuel tube, it can be used in a fuel tube for a fuel injection system or the like. The tubular molded article of the present invention is suitably used as an automotive fuel tube for gasoline, alcohol-mixed gasoline, diesel fuel, CNG (compressed natural gas), LPG (liquefied petroleum gas), and the like, but is not limited thereto, and can also be used as a fuel tube for fuel cell automobiles that use methanol, hydrogen, dimethyl ether (DME), and the like.

The present application claims the benefit of priority based on Japanese Patent Application No. 2023-057165 filed on March 31, 2023. The entire contents of the specification of Japanese Patent Application No. 2023-057165 filed on March 31, 2023 are incorporated herein by reference.

### EXAMPLES

Hereinafter, the present invention will be more specifically described with Examples and Comparative Examples. However, the present invention is not limited by following Examples.

In Examples and Comparative Examples, the following raw materials were used.

### <Thermoplastic Polyester Elastomer (A)>

### (Polyester elastomer (A-1))

Into a 4-liter autoclave were charged 481 parts by mass of dimethylnaphthalate (DMN), 165 parts by mass of 1,4-butanediol (BD), 142 parts by mass of polytetramethylene glycol (number average molecular weight: 1000) (PTMG), 1.6 parts by mass of Irganox 1330 (manufactured by BASF Corporation), and 0.8 parts by mass of tetrabutyl titanate (TBT), and the mixture was heated from room temperature to 220°C over 3 hours to perform a transesterification reaction. Subsequently, the inside of the vessel was gradually depressurized while the temperature was increased, and over 45 minutes, the conditions of 250°C and 1 torr or less were achieved to perform an initial polymerization reaction. Further, a polymerization reaction was allowed to proceed at 250°C and 1 torr or less for 2 hours, and the resulting molten polyester resin was drawn in the form of a strand from an outlet at the bottom of the polymerization tank, cooled in a water tank, and then cut into chips to obtain a polyester elastomer (A-1). The polyester elastomer (A-1) obtained had a soft segment content of 18 mass%, a melting point of 232°C, and a reduced viscosity of 1.21 dl/g.

### (Polyester elastomer (A-2))

The polyester elastomer (A-2) was produced in the same manner as the polyester elastomer (A-1), except that 495 parts by mass of dimethylnaphthalate, 172 parts by mass of 1,4-butanediol, and 118 parts by mass of polytetramethylene glycol (number average molecular weight: 1000) were used. The polyester elastomer (A-2) obtained had a soft segment content of 15 mass%, a melting point of 236°C, and a reduced viscosity of 1.15 dl/g.

### (Polyester elastomer (A-3))

The polyester elastomer (A-3) was produced in the same manner as the polyester elastomer (A-1), except that 513 parts by mass of dimethylnaphthalate, 181 parts by mass of 1,4-butanediol, and 94 parts by mass of polytetramethylene glycol (number average molecular weight: 1000) were used. The polyester elastomer (A-3) obtained had a soft segment content of 12 mass%, a melting point of 239°C, and a reduced viscosity of 1.11 dl/g.

### (Polyester elastomer (A-4))

The polyester elastomer (A-4) was produced in the same manner as the polyester elastomer (A-1), except that 533 parts by mass of dimethylnaphthalate, 191 parts by mass of 1,4-butanediol, and 63 parts by mass of polytetramethylene glycol (number average molecular weight: 1000) were used. The polyester elastomer (A-4) obtained had a soft segment content of 8 mass%, a melting point of 243°C, and a reduced viscosity of 1.06 dl/g.

### (Polyester elastomer (A-5))

The polyester elastomer (A-5) was produced in the same manner as the polyester elastomer (A-1), except that 452 parts by mass of dimethylnaphthalate, 151 parts by mass of 1,4-butanediol, and 180 parts by mass of polytetramethylene glycol (number average molecular weight: 1000) were used. The polyester elastomer (A-5) obtained had a soft segment content of 23 mass%, a melting point of 228°C, and a reduced viscosity of 1.26 dl/g.

### (Polyester elastomer (A-6))

The polyester elastomer (A-6) was produced in the same manner as the polyester elastomer (A-1), except that 556 parts by mass of dimethylnaphthalate, 203 parts by mass of 1,4-butanediol, and 23 parts by mass of polytetramethylene glycol (number average molecular weight: 1000) were used. The polyester elastomer (A-6) obtained had a soft segment content of 3 mass%, a melting point of 249°C, and a reduced viscosity of 1.00 dl/g.

### <Thickener (B)>

### (Thickener (B-1))

Polyethylene glycol diglycidyl ether ("DENACOL EX-850", manufactured by Nagase ChemteX Corporation, epoxy valence (average number of epoxy groups per molecule): 2)

### (Thickener (B-2))

Triglycidyl isocyanurate compound ("TEPIC-S", manufactured by Nissan Chemical Corporation, epoxy valence (average number of epoxy groups per molecule): 3)

### (Thickener (B-3))

Polycarbodiimide ("CARBODILITE HMV-8CA", manufactured by Nisshinbo Chemical Inc., carbodiimide valence (average number of carbodiimide groups per molecule): 11)

### <Other Additives>

### (Stabilizer)

Hindered phenol-type antioxidant ("Irganox 1010", manufactured by BASF Corporation)

### (Release agent)

Release agent ("Licolub WE 40", manufactured by Clariant Japan Co., Ltd.)

### [Examples 1 to 5, Comparative Examples 1 to 4]

### <Preparation of Polyester Elastomer Resin Composition>

Various components were melt-kneaded in a biaxial screw extruder according to the compounding composition shown in Table 1, and then pelletized to obtain pellets of Examples 1 to 5 and Comparative Examples 1 to 3. The polyester elastomer resin compositions thus obtained and the molded articles produced from the resin compositions were evaluated for the following material properties. The results are shown in Table 1.

### <Preparation of Fuel Tube>

The polyester elastomer resin composition obtained in each of Examples and Comparative Examples as an inner layer material and PELPRENE P-180BD (manufactured by Toyobo Co., Ltd.; polyester elastomer in which the polyester of the hard segment is composed of polybutylene terephthalate, and the soft segment is composed of PTMG) as an outer layer material were melt-extruded (co-extrusion molded) in the form of a hose using an extruder to produce a laminated hose (fuel tube) having an inner diameter of 12 mm. The inner layer had a thickness of 0.2 mm, and the outer layer had a thickness of 0.8 mm. As for the fuel tube of Comparative Example 4, P-180BD was used for both the inner layer and the outer layer. The fuel tubes obtained were evaluated for the following fuel tube properties. The results are shown in Table 1.

### [Melting Point]

A differential scanning calorimeter "DSC220" manufactured by Seiko Instruments & Electronics Ltd. was used. To be more specific, 5 mg of the thermoplastic polyester elastomer (A) was placed on an aluminum pan, and the pan was tightly sealed by pushing a lid. The thermoplastic polyester elastomer (A) was melted at 250°C for 2 minutes in nitrogen, then cooled to 50°C at a temperature drop rate of 20°C/min, and then further heated from 50°C to 250°C at a temperature rise rate of 20°C/min to measure a thermogram curve. An endothermic peak by melting was determined from the resulting thermogram curve, and was taken as the melting point.

### [Reduced Viscosity]

0.05 g of the thermoplastic polyester elastomer (A) was dissolved in 25 ml of a mixed solvent (phenol/tetrachloroethane=60/40 (mass ratio)), and the measurement was performed at 30°C using an Ostwald viscometer.

### [MFR]

The melt flow rate (MFR, unit: g/10 min) of pellets of the polyester elastomer resin composition obtained in each of Examples and Comparative Examples was measured in accordance with the test method (Method A) described in JIS K7210 (ASTM D1238) at a measurement temperature of 250°C and a load of 2160 g. For the measurement, the polyester elastomer resin composition having a moisture content of 0.1% by weight or less was used.

### [Tensile Strength at Break]

The tensile strength at break was measured in accordance with JIS K6251:2010. A test piece was prepared in the following manner. The polyester elastomer resin composition dried under reduced pressure at 100°C for 8 hours was subjected to injection molding into a flat plate of 100 mm × 100 mm × 2 mm using an injection molding machine (manufactured by Sanjo Seiki Co., Ltd., model-SAV) at a cylinder temperature of (melting point of the used thermoplastic polyester elastomer (A) + 20°C) and a mold temperature of 30°C, and then a dumbbell-shaped No. 3 test piece was punched out from the flat plate.

### [Oil Resistance (Weight Increase Rate)]

As gasoline for evaluation test, a simulated alcohol-blended gasoline was prepared by mixing toluene/isooctane/ethanol in a ratio of 40:40:20 (volume ratio). The above dumbbell-shaped No. 3 test piece was immersed in this gasoline for evaluation test for 48 hours, and the weight increase rate was calculated according to the following equation.

Weight increase rate (%) = (weight of test piece after immersion/weight of test piece before immersion) × 100

### [Fuel Barrier Properties]

Using an isobaric hose permeability measuring device (GTR-TUBE3-TG manufactured by GTR TEC Corporation), the permeability coefficient of the above-mentioned gasoline for evaluation test sealed in each fuel tube was measured at 40°C for one month (unit: mg/m/day). Evaluation was made as follows. The fuel tube with a measured value of less than 10 (mg/m/day) was evaluated as "⊚", the fuel tube with a measured value of 10 (mg/m/day) or more and less than 20 (mg/m/day) was evaluated as "∘", and the fuel tube with a measured value of 20 (mg/m/day) or more was evaluated as "×".

### [Low-Temperature Flexibility]

The fuel tube was cooled at -40°C for 3 hours and for 4 hours, and immediately thereafter bent at 180° to check for the presence or absence of cracks. Evaluation was made as follows. The fuel tube in which no cracks were generated both after cooling for 3 hours and after cooling for 4 hours was evaluated as "∘", the fuel tube in which cracks were generated only after cooling for 4 hours was evaluated as "Δ", and the fuel tube in which cracks were generated after both cooling times was evaluated as "×".

### [Heat Aging Resistance]

When the fuel tube was left in an environment of 135°C for 500 hours and then bent at 180°, the fuel tube in which neither crack nor break was generated was evaluated as "∘", and the fuel tube in which cracks or breaks were generated was evaluated as "×".

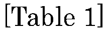

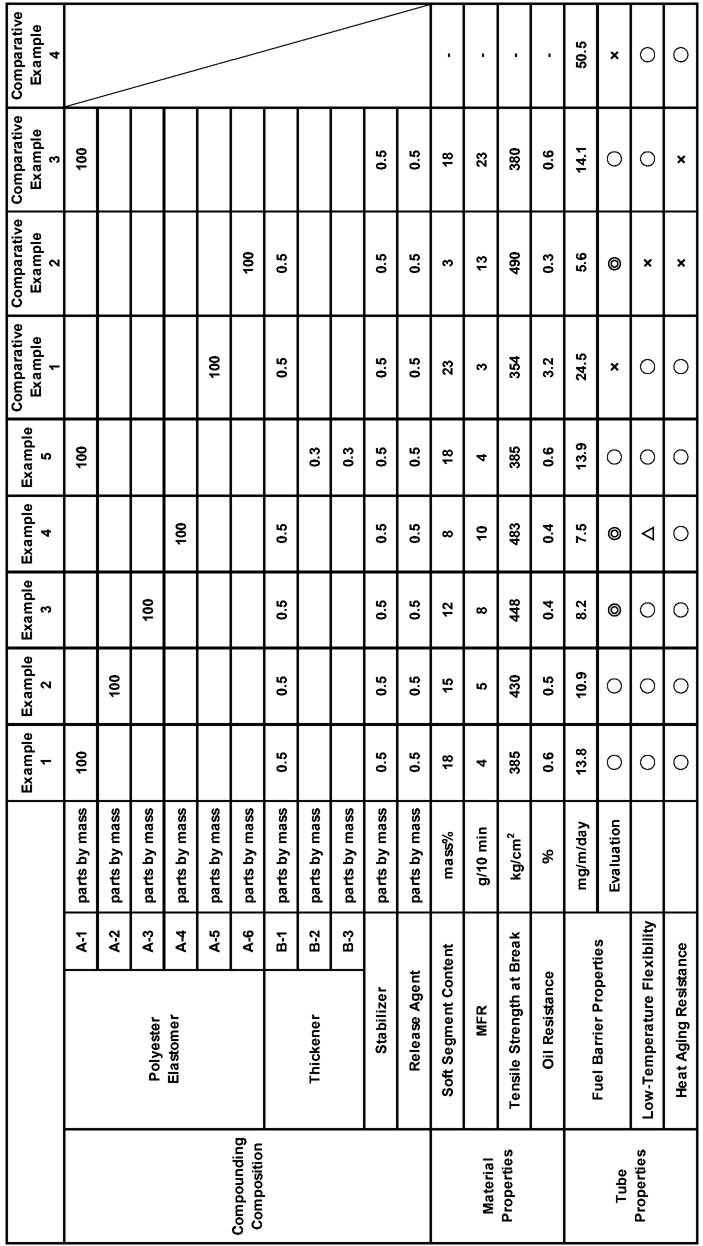

As is apparent from Table 1, Examples 1 to 5, which fall within the scope of the present invention, all exhibit excellent fuel barrier properties, oil resistance, heat aging resistance, and low-temperature flexibility.

### INDUSTRIAL APPLICABILITY

The polyester elastomer resin composition of the present invention has enhanced fuel evaporation gas barrier properties, enhanced heat aging resistance, enhanced oil resistance, and enhanced flexibility, and can be used for a tubular molded body such as a fuel tube. Therefore, the polyester elastomer resin composition of the present invention makes an extremely large contribution to the industry.

## Claims

1. A polyester elastomer resin composition comprising a thermoplastic polyester elastomer (A),
wherein the thermoplastic polyester elastomer (A) comprises a hard segment and a soft segment that are bonded to each other, the hard segment comprising a polyester containing an aromatic dicarboxylic acid and an aliphatic and/or alicyclic diol as constituent components, the soft segment being at least one selected from the group consisting of an aliphatic polyether, an aliphatic polyester, and an aliphatic polycarbonate,
wherein the hard segment comprises a naphthalenedicarboxylic acid component as the aromatic dicarboxylic acid component,
wherein a content of the soft segment in the thermoplastic polyester elastomer (A) is 5 to 22 mass%, and
wherein the polyester elastomer resin composition has a melt flow rate (MFR) of 15 g/10 min or less, as measured at a measurement temperature of 250°C and a load of 2.16 kg.

2. The polyester elastomer resin composition according to claim 1,
wherein the hard segment comprises a 2,6-naphthalenedicarboxylic acid component as the aromatic dicarboxylic acid component, and
wherein an amount of the 2,6-naphthalenedicarboxylic acid component is 85 mol% or more in a total of 100 mol% of all dicarboxylic acid components constituting the hard segment.

3. The polyester elastomer resin composition according to claim 1,
wherein the resin composition comprises a thickener (B), and
wherein the thickener (B) has at least one functional group capable of reacting with a terminal group of the thermoplastic polyester elastomer (A).

4. The polyester elastomer resin composition according to claim 3, wherein the functional group is at least one selected from the group consisting of an epoxy group, an acid anhydride group, a carbodiimide group, and an isocyanate group.

5. A tubular molded article comprising at least one layer formed from the polyester elastomer resin composition according to any one of claims 1 to 4.

6. A fuel tube comprising at least one layer formed from the polyester elastomer resin composition according to any one of claims 1 to 4.
